# EUROPEAN PATENT SPECIFICATION

(11) **EP 4 310 305 B1**
(45) Date of publication and mention of the grant of the patent: **01.07.2026**
(21) Application number: 23187361.3
(22) Date of filing: 24.07.2023
(51) Int. Cl.: F02C 3/22, F02C 3/30, F02C 7/12, F02C 7/143

(54) **HYDROGEN-OXYGEN GAS TURBINE ENGINE**
WASSERSTOFF-SAUERSTOFF-GASTURBINENTRIEBWERK
MOTEUR À TURBINE À GAZ HYDROGÈNE-OXYGÈNE

(30) Priority: 22.07.2022 US 202217871581
(43) Date of publication of application: 24.01.2024
(73) Proprietor: RTX Corporation, Farmington, CT 06032 (US)
(72) Inventor: TERWILLIGER, Neil J., Cheshire, 06410 (US); LEDWITH, JR., Walter A., Marlborough, 06447 (US); STAUBACH, Joseph B., Colchester, 06415 (US); MA, David Lei, Avon, 06001 (US)
(74) Representative: Dehns

(56) References cited:
- EP-A1- 4 227 511
- US-A- 5 953 900
- US-A1- 2018 334 957
- US-A1- 2021 207 500

## Description

### BACKGROUND OF THE INVENTION

This application relates to a gas turbine engine utilizing pre-pressurized oxygen rich gas delivered into a compressor, and hydrogen as a fuel.

Gas turbine engines are known, and typically include a compressor receiving air. The air is compressed and delivered into a combustor where it is mixed with fuel and ignited. Products of this combustion pass downstream over turbine rotors, driving them to rotate. The turbine rotors in turn drive the compressor rotors.

Gas turbine engines are sometimes utilized to provide electricity such as part of an electric grid. However, known gas turbine engines for providing electricity to an electric grid are somewhat inefficient.

Traditionally, gas turbine engines have used aviation fuel. However, more recently, various alternative fuels have been proposed. One such proposal utilizes hydrogen as a fuel. However, there are challenges with effectively operating such an engine.

US 5 953 900 A discloses a prior art closed loop steam cooled steam turbine.

### SUMMARY OF THE INVENTION

According to an aspect of the present invention, there is provided an energy supply system as claimed in claim 1.

Optionally, the gas is pre-pressurized to the pressure that is greater than the atmospheric pressure prior to be delivered into the compressor.

Alternatively, the gas is at the atmospheric pressure when delivered into the compressor.

Optionally, and in accordance with any of the above, a mass flow ratio is defined as a first mass flow across the turbine rotor compared to a second mass flow across the compressor. The mass flow ratio is greater than or equal to 2.0.

Optionally, and in accordance with any of the above, the mass flow ratio is greater than or equal to 10.0 and less than or equal to 25.

Optionally, and in accordance with any of the above, an engine pressure ratio is defined as an overall pressure at an exit of the turbine rotor divided by an inlet pressure into the energy supply system, and the engine pressure ratio is between 0.001 and 0.5.

Optionally, and in accordance with any of the above, at least some of the removed water is delivered to an electrolysis system which separates the water into oxygen and hydrogen. The separated oxygen and hydrogen are utilized as the gas and the fuel for the energy supply system.

Optionally, and in accordance with any of the above, a steam turbine is configured to receive steam downstream of the evaporator. The steam turbine drives a generator.

Optionally, and in accordance with any of the above, the fuel is liquid hydrogen.

Optionally, and in accordance with any of the above, the gas is pure oxygen.

Optionally, and in accordance with any of the above, the fuel and the steam are premixed in a mixing chamber prior to being delivered into the combustor.

These and other features of the present invention can be best understood from the following specification and drawings, the following of which is a brief description.

### BRIEF DESCRIPTION OF THE DRAWINGS

Figure 1A shows a first embodiment of an electric supply system.
Figure 1B shows another electric supply system that is outside the wording of claim 1.
Figure 2 shows another embodiment of an electric supply system.
Figure 3 shows another embodiment option with pre-mixing of fuel and steam.

### DETAILED DESCRIPTION

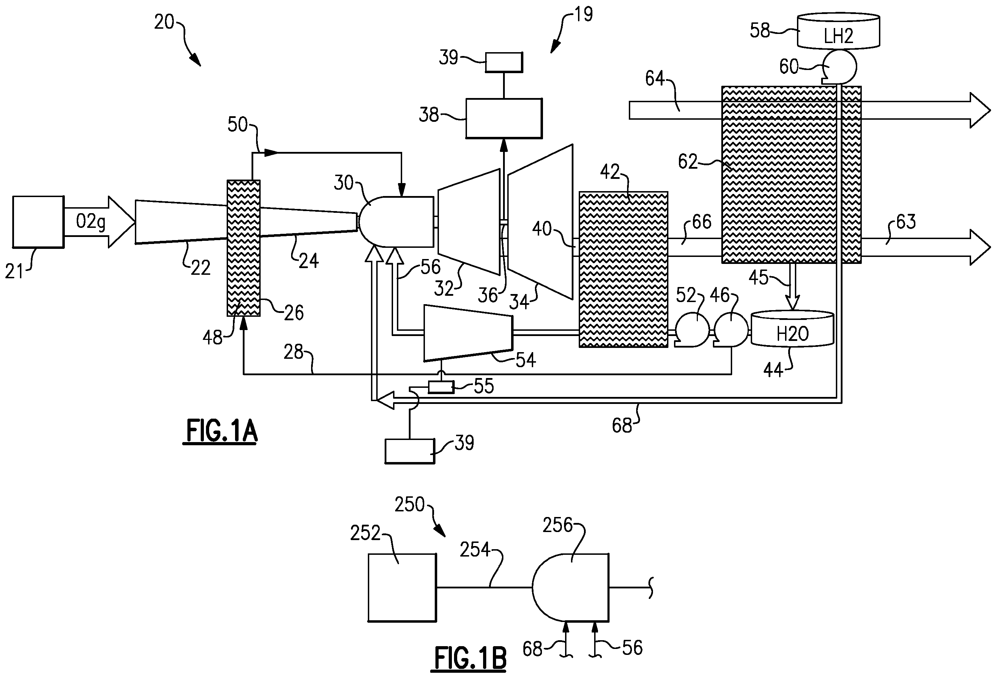

A gas turbine engine 20 as shown in Figure 1A, as part of an electric storage system 19, incorporates a source of gas 21 (source 21). The gas may be stored in the source 21 at a pre-pressurized pressure above an ambient pressure. In the prior art, the gas delivered into a compressor 24 of the gas turbine engine 20 has typically been air at ambient pressure, or slightly higher pressure if it is downstream of a fan. However, in one embodiment of the present invention, the gas may be pre-pressurized and stored at the source 21.

In embodiments, the gas may be stored on the order of 10,000-15,000 PSI (68.9 MPa - 103.4 MPa). On the other hand, the gas may also be stored effectively at atmospheric pressure. If stored at atmospheric pressure, a very large storage location may be needed, especially if system 19 is to provide power to a large consumer, such as a power grid. One example storage location could be underground caverns.

In another arrangement 250 shown in Figure 1B, that is outside the wording of claim 1, the gas is stored as pressurized at 252 and delivered directly into a combustor 256 through line 254. The remainder of Figure 1A downstream of the combustor 256 could be effectively as shown in Figure 1A. This embodiment 250 may eliminate a requirement to have compressors 22/24 in the electric storage system 19.

Under each of these options gas could be said to be at a pressure greater than an atmospheric pressure at the location where the engine may be operating.

The gas stored in the source 21 may effectively include pure oxygen, and in embodiments may be include a composition of greater than 80% oxygen. As used in this application "pure oxygen" means equal to, or greater than, 99.99%. By eliminating the nitrogen, which has typically been included in the air delivered into prior art gas turbine engines, the amount of gas which will be oxidized in the combustor 30 is increased, and thus increased energy is provided by the gas turbine engine 20.

The compressor 22 is associated with a second compressor 24. The gas compressed in the compressors 22/24 is delivered into the combustor 30 where it is mixed with fuel from a line 68, and with steam from a line 56. The fuel in line 68 may be hydrogen. By burning hydrogen and mixed oxygen in the combustor 30 the temperature in the combustor 30 will be quite high. However, by providing steam 56, the temperature becomes manageable.

Downstream of the combustor 30, the products of combustion pass across a turbine 32, and a second turbine 34, driving the turbines 32/34 to rotate. A shaft 36 is driven by the turbines 32/34 and in turn drives the compressor rotors 22/24. The shaft 36 drives a generator 38 which produces electricity. The system is described somewhat schematically above. Indeed, in some embodiments, the two-spool engine 20 illustrated with two compressors 22/24 and two turbines 32/34 may include two shafts 36, and each could drive a generator, such as generator 38. The electricity may be utilized such as to power an electric grid 39 to provide power to a community, industrial facility, etc.

Products of combustion 40 downstream of the turbine 34 pass through an evaporator 42. Products of combustion downstream of the evaporator 42 pass at 66 into a condenser 62. The condenser 62 heats fuel from a source of hydrogen 58 provided with an optional pump 60. A fluid in line 64 such as air, water, oil, etc. will cool the products of combustion 66. In addition, the products of combustion 66 will be further cooled by heating the fuel in the condenser 62.

Water will be removed from the products of combustion in the condenser 62 as shown at 45. The water may be stored at source 44. A pump 46 may deliver the water into an intercooler 48, where it cools the oxygen intermediate the compressor stages 22/24. Line 50 downstream of the intercooler 48 utilizes this heated water. In one embodiment, line 50 is delivered back into the combustor 30 as steam. However, other uses of this steam may benefit from this disclosure such as returning the water or steam in line 50 to the evaporator for further heating before arriving at the combustor through line 56.

Water also passes into a pump 52 and through the evaporator 42. The products of combustion at 40 heat the water in the evaporator 42 such that it becomes steam, and drives a steam turbine 54. Steam turbine 54 may be associated with a generator 55, and may also provide electric power to be sent to the grid 39. At 56, the steam downstream of the turbine 54 passes into the combustor 30.

The use of the steam injected into the combustor 30 assists in the combustor 30 being able to operate with the very high temperatures that will occur with the high oxygen percentages and hydrogen as a fuel.

By utilizing pre-pressurized gas delivered into the compressor 22, the overall pressure ratio of the compressor 22/24 is reduced for a given turbine expansion ratio.

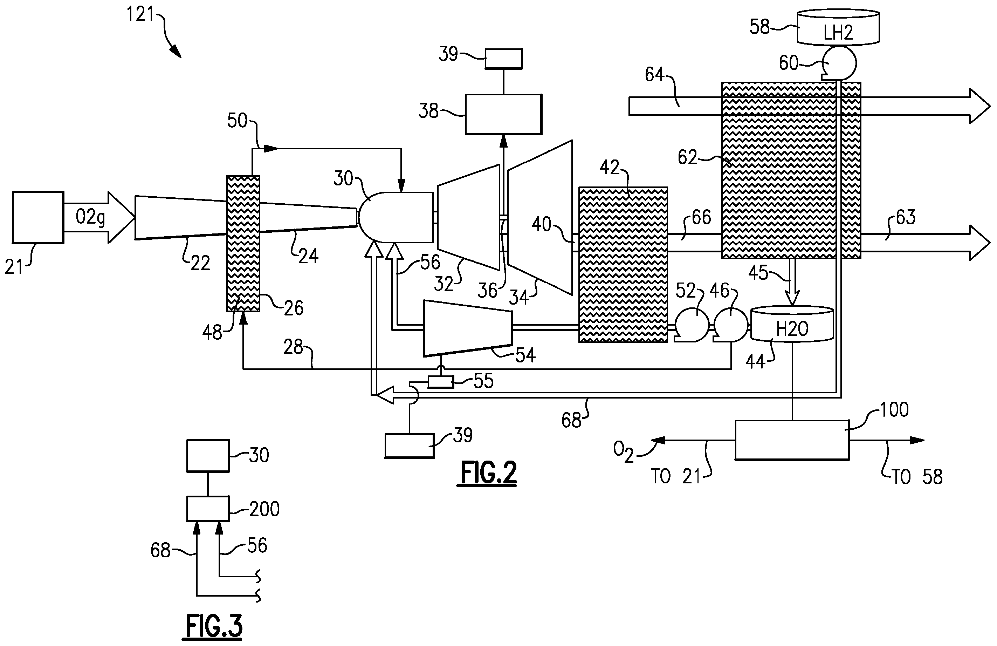

As an example, the overall engine pressure ratio (EPR) of the turbine exit pressure divided by the inlet pressure into the system may be less than 0.5. The EPR is preferably equal to or greater than 0.001. The engine pressure ratio would use the inlet pressure into the compressor in the Figure 1A embodiment (or the Figure 2/3 embodiments) and would use the inlet pressure in the Figure 1B arrangement.

In addition, since steam is also injected into the combustor 30, the mass flow across the turbines 32/34 is much greater than the mass flow across the compressors 22/24. In embodiments, the mass flow across the turbines 32/34 may be equal to or greater than twice the mass flow across the compressors 22/24.

In embodiments, this mass flow ratio may be equal to or greater than 10, and in other embodiments equal to or greater than 20. In embodiments, the mass flow ratio is less than 25.

By eliminating the volume of nitrogen in the combustor 30 and therefore concentrating the oxidizer, one allows the use of additional steam content, and further increases the energy which can be obtained from the combustion. A line 63 downstream of the condenser 62 receives the products of combustion which may be some small fraction of the original products of combustion after the removal of the water at line 45. In embodiments, the source of hydrogen 58 may be liquid hydrogen.

The oxygen and hydrogen may be stored indefinitely such that the energy supply system 19 may be available to supplement the power to grid 39 when the grid 39 otherwise has its electric sources fail to meet the energy demand. That is, the system 19 may be utilized as an emergency or reserve source of electricity that may be relied upon to be available as needed.

As with the oxygen rich gas, the hydrogen may be stored pressurized or at atmospheric pressure.

Figure 2 shows an embodiment 121 which is generally operably identical to the embodiment 20 of Figure 1, other than the water from the source 44 is also routed to an electrolysis system 100 which separates the water into oxygen and hydrogen to be delivered back into the system 121 such as the source of gas 21, and the source of fuel 58. In this embodiment, the water cycle is effectively a closed loop.

Any known electrolysis system may be utilized here.

Figure 3 shows an optional feature wherein the source of steam in line 56 and the source of fuel in line 68 are pre-mixed in a mixing chamber 200 before being delivered into the combustor 30.

The use of the systems set forth here eliminates carbon and nitrous oxide emissions, and thus provides valuable benefits.

Although embodiments of this disclosure have been shown, a worker of ordinary skill in this art would recognize that modifications would come within the scope of this disclosure. For that reason, the following claims should be studied to determine the true scope and content of this disclosure.

## Claims

1. An energy supply system (19; 121) comprising:
a source of gas (21) which is at a pressure that is greater than an atmospheric pressure and is configured to deliver the gas (21) into a combustor (30) where it is mixed with a fuel (58), the combustor (30) also connected to receive a source of steam (56), the combustor (30) being operable to provide combustion, wherein products of the combustion downstream of the combustor (30) are delivered across a turbine rotor (32, 34), the turbine rotor (32, 34) being provided with a shaft (36) that drives a generator (38), an evaporator (42) downstream of the turbine rotor (32, 34) receiving the products of the combustion, and the evaporator (42) being operable to heat a source of water (44), and the source of water (44) downstream of the evaporator (42) being the source of steam (56), wherein the gas (21) comprises greater than 80% oxygen and the fuel (58) comprises hydrogen, wherein:
the source of gas (21) comprises a compressor (22, 24) that is operable to compress the gas (21) prior to it being delivered into the combustor (30);
the compressor (22, 24) is a two stage compressor (22, 24), and the turbine (32) is a two stage turbine (32);
the energy supply system (19; 121) further comprises a condenser (62) positioned downstream of the evaporator (42), the products of combustion passing through the condenser (62)
and heating the fuel (58) in a line (68) between the source of fuel (58) and the combustor (30) upstream of the combustor (30);
the condenser (62) removes water from the products of combustion (40) and the removed water is collected at the source of water (44); and
the energy supply system (19; 121) further comprises an intercooler (48) positioned between a first and second compressor stage, said intercooler (48) being provided with water upstream of the evaporator (42), and being operable to cool the gas (21) intermediate the first and second compressor stage.

2. The energy supply system (19; 121) as set forth in claim 1, wherein the turbine shaft (36) drives a compressor rotor.

3. The energy supply system (19; 121) as set forth in claim 1 or 2, configured such that the gas (21) is pre-pressurized to a pressure that is greater than atmospheric pressure prior to being delivered into the compressor (22, 24).

4. The energy supply system as set forth in claim 1 or 2, configured such that the gas is at atmospheric pressure when delivered into the compressor (22, 24).

5. The energy supply system (19; 121) as set forth in any preceding claim, wherein a mass flow ratio is defined as a first mass flow across the turbine rotor (32, 34) compared to a second mass flow across the compressor (24), and the mass flow ratio is greater than or equal to 2.0.

6. The energy supply system (19; 121) as set forth in claim 5, wherein the mass flow ratio is greater than or equal to 10.0 and less than or equal to 25.

7. The energy supply system (19; 121) as set forth in any preceding claim, wherein an engine pressure ratio is defined as an overall pressure at an exit of the turbine rotor (32) divided by an inlet pressure into the energy supply system (19; 121), and the engine pressure ratio is between 0.001 and 0.5.

8. The energy supply system (121) as set forth in any preceding claim, wherein at least some of the removed water is delivered to an electrolysis system (100) which separates the water into oxygen and hydrogen, and the separated oxygen and hydrogen being utilized as the gas (21) and the fuel (58) for the energy supply system (19; 121).

9. The energy supply system (19; 121) as set forth in any preceding claim, further comprising a steam turbine (54) configured to receive steam downstream of the evaporator (42), the steam turbine (54) driving a generator (55).

10. The energy supply system (19; 121) as set forth in any preceding claim, wherein a line (50) is configured to deliver the water from the intercooler (48), as steam, into the combustor (30).

11. The energy supply system (19; 121) as set forth in any preceding claim, wherein the fuel (58) is liquid hydrogen.

12. The energy supply system (19; 121) as set forth in any preceding claim, wherein the gas (21):
is pure oxygen.

13. The energy supply system (19; 121) as set forth in any preceding claim, wherein the fuel (58) and the steam are premixed in a mixing chamber (200) prior to being delivered into the combustor (30).

## Patentansprüche

1. Energieversorgungssystem (19; 121), umfassend:
eine Gasquelle (21), die unter einem Druck steht, der größer als ein Atmosphärendruck ist, und konfiguriert ist, um das Gas (21) in eine Brennkammer (30) zu liefern, wo es mit einem Brennstoff (58) gemischt wird, wobei die Brennkammer (30) auch so angeschlossen ist, dass sie eine Dampfquelle (56) empfängt,
wobei die Brennkammer (30) betreibbar ist, um eine Verbrennung bereitzustellen, wobei Verbrennungsprodukte stromabwärts der Brennkammer (30) über einen Turbinenrotor (32, 34) geliefert werden, wobei der Turbinenrotor (32, 34) mit einer Welle (36) versehen ist, die einen Generator (38) antreibt, einen Verdampfer (42) stromabwärts des Turbinenrotors (32, 34), der die Verbrennungsprodukte empfängt, wobei der Verdampfer (42) betreibbar ist, um eine Wasserquelle (44) zu erhitzen, und wobei die Wasserquelle (44) stromabwärts des Verdampfers (42) die Dampfquelle (56) ist, wobei das Gas (21) mehr als 80 % Sauerstoff umfasst und der Brennstoff (58) Wasserstoff umfasst, wobei:
die Gasquelle (21) einen Verdichter (22, 24) umfasst, der betreibbar ist, um das Gas (21) zu verdichten, bevor es in die Brennkammer (30) geliefert wird;
der Verdichter (22, 24) ein zweistufiger Verdichter (22, 24) ist und die Turbine (32) eine zweistufige Turbine (32) ist;
das Energieversorgungssystem (19; 121) ferner einen Kondensator (62) umfasst, der stromabwärts des Verdampfers (42) positioniert ist, wobei die Verbrennungsprodukte den Kondensator (62) passieren und den Brennstoff (58) in einer Leitung (68) zwischen der Brennstoffquelle (58) und der Brennkammer (30) stromaufwärts der Brennkammer (30) erhitzen;
der Kondensator (62) Wasser aus den Verbrennungsprodukten (40) entfernt und das entfernte Wasser an der Wasserquelle (44) gesammelt wird; und
das Energieversorgungssystem (19; 121) ferner einen Zwischenkühler (48) umfasst, der zwischen einer ersten und zweiten Verdichterstufe positioniert ist, wobei der Zwischenkühler (48) stromaufwärts des Verdampfers (42) mit Wasser versorgt wird und betreibbar ist, um das Gas (21) zwischen der ersten und zweiten Verdichterstufe zu kühlen.

2. Energieversorgungssystem (19; 121) nach Anspruch 1, wobei die Turbinenwelle (36) einen Verdichterrotor antreibt.

3. Energieversorgungssystem (19; 121) nach Anspruch 1 oder 2, das so konfiguriert ist, dass das Gas (21) vor der Lieferung in den Verdichter (22, 24) auf einen Druck vorverdichtet wird, der größer als der Atmosphärendruck ist.

4. Energieversorgungssystem nach Anspruch 1 oder 2, das so konfiguriert ist, dass das Gas bei Lieferung in den Verdichter (22, 24) unter Atmosphärendruck steht.

5. Energieversorgungssystem (19; 121) nach einem der vorhergehenden Ansprüche, wobei ein Massenstromverhältnis definiert ist als ein erster Massenstrom über den Turbinenrotor (32, 34) im Vergleich zu einem zweiten Massenstrom über den Verdichter (24), und wobei das Massenstromverhältnis größer als oder gleich 2,0 ist.

6. Energieversorgungssystem (19; 121) nach Anspruch 5, wobei das Massenstromverhältnis größer als oder gleich 10,0 und kleiner als oder gleich 25 ist.

7. Energieversorgungssystem (19; 121) nach einem der vorhergehenden Ansprüche, wobei ein Triebwerksdruckverhältnis definiert ist als ein Gesamtdruck an einem Austritt des Turbinenrotors (32) dividiert durch einen Eintrittsdruck in das Energieversorgungssystem (19; 121), und wobei das Triebwerksdruckverhältnis zwischen 0,001 und 0,5 liegt.

8. Energieversorgungssystem (121) nach einem der vorhergehenden Ansprüche, wobei mindestens ein Teil des entfernten Wassers an ein Elektrolysesystem (100) geliefert wird, welches das Wasser in Sauerstoff und Wasserstoff trennt, und wobei der getrennte Sauerstoff und Wasserstoff als das Gas (21) und der Brennstoff (58) für das Energieversorgungssystem (19; 121) genutzt werden.

9. Energieversorgungssystem (19; 121) nach einem der vorhergehenden Ansprüche, ferner umfassend eine Dampfturbine (54), die konfiguriert ist, um Dampf stromabwärts des Verdampfers (42) zu empfangen, wobei die Dampfturbine (54) einen Generator (55) antreibt.

10. Energieversorgungssystem (19; 121) nach einem der vorhergehenden Ansprüche, wobei eine Leitung (50) konfiguriert ist, um das Wasser vom Zwischenkühler (48) als Dampf in die Brennkammer (30) zu liefern.

11. Energieversorgungssystem (19; 121) nach einem der vorhergehenden Ansprüche, wobei der Brennstoff (58) flüssiger Wasserstoff ist.

12. Energieversorgungssystem (19; 121) nach einem der vorhergehenden Ansprüche, wobei das Gas (21) reiner Sauerstoff ist.

13. Energieversorgungssystem (19; 121) nach einem der vorhergehenden Ansprüche, wobei der Brennstoff (58) und der Dampf in einer Mischkammer (200) vorgemischt werden, bevor sie in die Brennkammer (30) geliefert werden.

## Revendications

1. Système d'alimentation en énergie (19 ; 121) comprenant :
une source de gaz (21) qui est à une pression qui est supérieure à une pression atmosphérique et est configurée pour distribuer le gaz (21) dans une chambre de combustion (30) où il est mélangé à un combustible (58), la chambre de combustion (30) étant également reliée pour recevoir une source de vapeur (56), la chambre de combustion (30) pouvant fonctionner pour fournir la combustion, dans lequel des produits de la combustion, en aval de la chambre de combustion (30), sont distribués à travers un rotor de turbine (32, 34), le rotor de turbine (32, 34) étant muni d'un arbre (36) qui entraîne un générateur (38), un évaporateur (42), situé en aval du rotor de turbine (32, 34), recevant les produits de la combustion, et l'évaporateur (42) pouvant fonctionner pour chauffer une source d'eau (44), et la source d'eau (44), en aval de l'évaporateur (42), étant la source de vapeur (56), dans lequel le gaz (21) comprend plus de 80 % d'oxygène et le combustible (58) comprend de l'hydrogène, dans lequel :
la source de gaz (21) comprend un compresseur (22, 24) qui peut fonctionner pour comprimer le gaz (21) avant qu'il ne soit distribué dans la chambre de combustion (30) ;
le compresseur (22, 24) est un compresseur à deux étages (22, 24), et la turbine (32) est une turbine à deux étages (32) ;
le système d'alimentation en énergie (19 ; 121) comprend en outre un condenseur (62) positionné en aval de l'évaporateur (42), les produits de combustion passant à travers le condenseur (62) et chauffant le combustible (58) dans une conduite (68) entre la source de combustible (58) et la chambre de combustion (30) en amont de la chambre de combustion (30) ;
le condenseur (62) élimine l'eau des produits de combustion (40) et l'eau éliminée est recueillie au niveau de la source d'eau (44) ; et
le système d'alimentation en énergie (19 ; 121) comprend en outre un refroidisseur intermédiaire (48) positionné entre un premier et un second étage de compresseur, ledit refroidisseur intermédiaire (48) recevant l'eau en amont de l'évaporateur (42) et pouvant fonctionner pour refroidir le gaz (21) entre le premier et le second étage de compresseur.

2. Système d'alimentation en énergie (19 ; 121) selon la revendication 1, dans lequel l'arbre de turbine (36) entraîne un rotor de compresseur.

3. Système d'alimentation en énergie (19 ; 121) selon la revendication 1 ou 2, configuré de telle sorte que le gaz (21) est pré-pressurisé à une pression qui est supérieure à la pression atmosphérique avant d'être distribué dans le compresseur (22, 24).

4. Système d'alimentation en énergie selon la revendication 1 ou 2, configuré de telle sorte que le gaz est à pression atmosphérique lorsqu'il est distribué dans le compresseur (22, 24).

5. Système d'alimentation en énergie (19 ; 121) selon une quelconque revendication précédente, dans lequel un rapport de débit massique est défini comme un premier débit massique à travers le rotor de turbine (32, 34) par comparaison avec un second débit massique à travers le compresseur (24), et le rapport de débit massique est supérieur ou égal à 2,0.

6. Système d'alimentation en énergie (19 ; 121) selon la revendication 5, dans lequel le rapport de débit massique est supérieur ou égal à 10,0 et inférieur ou égal à 25.

7. Système d'alimentation en énergie (19 ; 121) selon une quelconque revendication précédente, dans lequel un rapport de pression de moteur est défini comme une pression globale au niveau d'une sortie du rotor de turbine (32) divisée par une pression d'entrée dans le système d'alimentation en énergie (19 ; 121), et le rapport de pression de moteur est compris entre 0,001 et 0,5.

8. Système d'alimentation en énergie (121) selon une quelconque revendication précédente, dans lequel au moins une partie de l'eau éliminée est distribuée vers un système d'électrolyse (100) qui sépare l'eau en oxygène et en hydrogène, l'oxygène et l'hydrogène séparés étant utilisés comme gaz (21) et comme combustible (58) pour le système d'alimentation en énergie (19 ; 121).

9. Système d'alimentation en énergie (19 ; 121) selon une quelconque revendication précédente, comprenant en outre une turbine à vapeur (54) configurée pour recevoir de la vapeur en aval de l'évaporateur (42), la turbine à vapeur (54) entraînant un générateur (55).

10. Système d'alimentation en énergie (19 ; 121) selon une quelconque revendication précédente, dans lequel une conduite (50) est configurée pour distribuer l'eau du refroidisseur intermédiaire (48), sous forme de vapeur, dans la chambre de combustion (30).

11. Système d'alimentation en énergie (19 ; 121) selon une quelconque revendication précédente, dans lequel le combustible (58) est de l'hydrogène liquide.

12. Système d'alimentation en énergie (19 ; 121) selon une quelconque revendication précédente, dans lequel le gaz (21) : est de l'oxygène pur.

13. Système d'alimentation en énergie (19 ; 121) selon une quelconque revendication précédente, dans lequel le combustible (58) et la vapeur sont prémélangés dans une chambre de mélange (200) avant d'être distribués dans la chambre de combustion (30).
